# EUROPÄISCHE PATENTSCHRIFT

(11) **EP 2 185 055 B1**
(45) Veröffentlichungstag und Bekanntmachung des Hinweises auf die Patenterteilung: **06.08.2014**
(21) Anmeldenummer: 08803142.2
(22) Anmeldetag: 21.08.2008
(51) Int. Cl.: A47L 15/42

(54) **GESCHIRRSPÜLMASCHINE**
DISHWASHER
LAVE-VAISSELLE

(30) Priorität: 31.08.2007 DE 102007041308
(43) Veröffentlichungstag der Anmeldung: 19.05.2010
(73) Patentinhaber: BSH Bosch und Siemens Hausgeräte GmbH, 81739 München (DE)
(72) Erfinder: DELLE, Daniel, 89431 Bächingen (DE); HESTERBERG, Bernd, 89520 Heidenheim (DE); JERG, Helmut, 89537 Giengen (DE); PAINTNER, Kai, 86477 Adelsried (DE); REHM, Karlheinz, 89561 Dischingen Ortst. Trugenhofen (DE); ROSENBAUER, Michael, 86756 Reimlingen (DE)
(86) Internationale Anmeldenummer: PCT/EP2008/060976
(87) Internationale Veröffentlichungsnummer: WO 2009/027320

(56) Entgegenhaltungen:
- WO-A-2005/051158
- WO-A-2005/053502
- WO-A-2005/063110
- DE-A1- 4 243 605

## Beschreibung

Die Erfindung betrifft eine Geschirrspülmaschine, insbesondere Haushalts-Geschirrspülmaschine, wenigstens umfassend einen Behandlungsraum, in dem Spülgut mit Spülflotte beaufschlagbar ist und mit einem als Wärmetauscher dienenden Vorratsbehälter, der in wärmeleitfähigem Kontakt mit dem Behandlungsraum angeordnet ist und mittels Zuführleitungsmitteln, die eine Zuführleitung zu einem hausseitigen Versorgungsnetz und ein Wassereinlassventil umfassen, mit Frischwasser aus dem hausseitigen Versorgungsnetz befüllbar ist, und wobei der vorgewärmte Inhalt des Vorratsbehälters mittels Ausgangsleitungsmitteln in den Behandlungsraum einleitbar ist. Bei der Geschirrspülmaschine der WO 2005/063110 A2 ist ein Folienbeutel als Speicherbehälter lediglich zum Zwischenspeichern von im Spülbehälter vorhandener Spülflotte vorgesehen. Dieser Speicherbehälter ist über eine Spülflottenleitung von der Laugenpumpe oder der Umwälzpumpe der Geschirrspülmaschine mit Spülflotte aus dem Spülbehälter befüllbar.

Bei der Geschirrspülmaschine der WO 2005/051158 A1 ist ebenfalls ein Folienbeutel aus flexiblem Material als Speicherbehälter lediglich zum Zwischenspeichern von im Spülbehälter vorhandener Spülflotte vorgesehen. Dieser Speicherbehälter ist entweder thermisch isoliert oder steht im wärmeleitendem Kontakt mit einer Außenwand der Geschirrspülmaschine.

Bei der Geschirrspülmaschine der DE 42 43 605 A1 wird am Ende des Teilprogrammschritts Zwischenspülen die im Teilprogrammschritt Zwischenspülen im Spülbehälter umgewälzte Flüssigkeitsmenge dem Spülbehälter entzogen und in einem Vorratsbehälter, d.h. Flottenspeicher zwischengespeichert. Dieser kann ebenfalls als Folienbeutel zwischen dem Spülbehälter und einer äußeren Seitenwand der Geschirrspülmaschine ausgebildet sein.

Aus der EP 0 669 097 A2 ist eine Geschirrspülmaschine mit einem Speicherbehälter bzw. Flottenspeicher bekannt, der separiert, d.h. mit Spaltabstand vom Spülbehälter angeordnet ist und ebenfalls nur zur Zwischenspeicherung von schon benutztem Wasser aus dem Spülbehälter dient. Zusätzlich kann dieser Speicherbehälter als Zumessvolumengefäß für Frischwasser aus dem Wasserversorgungsnetz verwendet werden. Dabei wird in den Speicherbehälter einströmendes Frischwasser bei Erreichen eines vorgegebenen Füllstands durch Öffnen eines Ventils in den Spülbehälter ohne Zwischenspeicherung geleitet.

Aus der WO 2005/053502 A2 ist eine Geschirrspülmaschine mit einer Trocknungseinrichtung zum Trocknen der Luft der Geschirrspülmaschine bekannt. Die Trocknungseinrichtung weist einenBehälter mit einem reversibel hydrierbaren Material (Sorber) sowie einen Behälter mit einem Medium auf, die über eine Austauschleitung mit einem Ventil miteinander verbunden sind.

Bei der Geschirrspülmaschine der DE 27 30 489 A1 ist nur ein als Wärmetauscher dienender Vorratsbehälter vorgesehen, der in wärmeleitendem Kontakt zum Spülbehälter steht. Er dient lediglich der Vorerwärmung einer für einen Programmabschnitt benötigten Spülflüssigkeitsmenge an Frischwasser, das aus einem ortsfesten Frischwassernetz entnommen wird. Die Vorerwärmung des in den Vorratsbehälter gespeicherten Frischwassers wird dadurch bewirkt, dass der verbrauchten erwärmten Spülflüssigkeit, dem heißen Geschirr sowie der Geschirrspülmaschine Wärmeenergie entzogen und auf das Frischwasser im Vorratsbehälter durch dessen wärmeleitendem Kontakt zum Spülbehälter übertragen wird.

Aufgabe der Erfindung ist es daher, neben dem Energieverbrauch auch den Wasserverbrauch zu reduzieren. Die Aufgabe der Erfindung wird dadurch gelöst, dass Spülflotte aus dem Behandlungsraum in den Vorratsbehälter fördernde Rückführmittel vorgesehen sind. Somit erlaubt die erfindungsgemäße Geschirrspülmaschine, insb. nur leicht verschmutzte Spülflotte, wie beispielsweise auch mit Klarspüler versehenes Wasser in den Vorratsbehälter zwischenzuspeichern, beispielsweise nach Abschluss eines Klarspülvorganges. Somit steht bei einem erneuten Reinigungsvorgang schon in dem Vorratsbehälter bevorratetes, leicht verschmutztes Spülwasser bereit, um beispielsweise einen Vorspülschritt durchzuführen, sodass der Wasserverbrauch reduziert ist.

Erfindungsgemäß ist vorgesehen, dass der Vorratsbehälter in wärmeleitfähigem Kontakt mit dem Wärmeraum angelegt ist. Somit kann die in dem Vorratsbehälter bevorratete Spülflotte vor ihrer Verwendung in dem Behandlungsraum durch die Abwärme des Behandlungsraumes vorerwärmt werden, wenn die im Behandlungsraum umgewälzte Spülflotte aufgeheizt wird.

Ferner ist vorzugsweise vorgesehen, dass der Vorratsbehälter in wärmeleitfähigen Kontakt mit einer Außenwand der Geschirrspülmaschine angeordnet ist, so dass es ferner möglich ist, das in dem Vorratsbehälter bevorratete Wasser, das beispielsweise aus einem hausseitigen Versorgungsnetz entnommen wurde, sich bis zu seiner Verwendung in der Geschirrspülmaschine auf die in der Umgebung der Geschirrspülmaschine, d.h. auf Raumtemperatur, erwärmen kann.

Vorzugsweise ist dabei vorgesehen, dass die Rückführmittel wenigstens eine Pumpe umfassen, mit der die Spülflotte aus dem Behandlungsraum in den Vorratsbehälter gefördert werden kann. Dabei kann es sich um eine Pumpe handeln, die als Laugenpumpe ausgebildet ist und es erlaubt, am Ende eines Spülvorganges die Spülflotte aus dem Behandlungsraum zu fördern. Hierzu kann eine die Pumpe und den Vorratsbehälter verbindende Leitung vorgesehen sein, die jedenfalls mittels eines Ventils geöffnet und geschlossen werden kann, um wahlweise mittels der Laugenpumpe Spülflotte in den Vorratsbehälter oder in ein Wassernetz zu fördern.

Ferner ist vorzugsweise vorgesehen, dass die Pumpe mit Leitungsmitteln zum Umwälzen von Spülflotte im Behandlungsraum verbunden ist, d.h., dass die Pumpe als Umwälzpumpe ausgebildet ist und während eines Reinigungsschrittes die sich im Sumpf einer Geschirrspülmaschine sammelnde Spülflotte durch ein Leitungssystem in den im Behandlungsraum angeordneten Sprüharmen zuführt, die der gezielten Beaufschlagung von Spülgut mit Spülflotte dienen.

Des weiteren ist vorzugsweise vorgesehen, dass, die Rückführmittel wenigstens eine Rückführleitung umfassen, die den Behandlungsraum und den Vorratsbehälter miteinander verbinden die den Behandlungsraum und den Tank miteinander verbindet, sodass mit einfachen Mitteln sichergestellt ist, dass Spülflotte aus dem Behandlungsraum in den Vorratsbehälter gefördert und gespeichert werden kann.

Ferner weist die Leitung vorzugsweise ein Ventil auf, mit dem die Leitung geöffnet und geschlossen werden kann, sodass bei geöffneter Leitung Spülflotte aus dem Behandlungsraum in den Vorratsbehälter gefördert werden kann, während bei geschlossenem Ventil die Pumpenleistung für andere Zwecke genutzt werden kann, beispielsweise um Spülflotte umzuwälzen oder um Spülflotte abzupumpen.

In einer bevorzugten Ausführungsform ist ein Trocknungssystem zur Unterstützung des am Ende eines Reinigungsvorgangs vorgesehenen Trocknungsvorgangs vorgesehen, um das mit Spülflotte benetzten Spülguts zu trocknen. Derartige Trocknungssysteme sind dem Fachmann bekannt und können auf der Zufuhr- und/oder Abfuhr von Luft in bzw. aus dem Behandlungsraum beruhen, wobei zusätzlich Heizeinrichtung zum Erwärmen der Luft vorgesehen sein können. Ferner sind Trocknungssysteme dem Fachmann bekannt, bei denen Luft aus dem Behandlungsraum in einem geschlossenen Kreislauf zirkuliert, wobei zur Kühlung ein Wärmetauscher vorgesehen sein kann. Vorzugsweise weist jedoch die Trocknungseinrichtung eine Heizeinrichtung mit einem Behälter mit reversibel dehydrierbarem Material, insb. Zeolit, auf, durch die Luft aus dem Behandlungsraum durchleitbar ist, so dass das Zeolit Feuchtigkeit aufnehmen kann. Dies erlaubt es, exotherme Absorptionswärme zum Trocknen von Spülgut zu verwenden. Mit der Heizeinrichtung wiederum ist es möglich, das Zeolit durch Erwärmung zu dehydrieren.

Ferner gehört zur Erfindung ein Verfahren zum Betreiben einer Geschirrspülmaschine, insbesondere einer Haushalts-Geschirrspülmaschine, bei dem in einem Behandlungsraum aufgenommenes Spülgut mit Spülflotte beaufschlagt wird und bei dem der Inhalt eines als Wärmetauscher dienenden Vorratsbehälters, der in wärmeleitendem Kontakt zum Behandlungsraum steht, vorerwärmt wird, wobei der Vorratsbehälter mittels Zuführleitungsmitteln, die eine Zuführleitung zu einem hausseitigen Versorgungsnetz und ein Wassereinlassventil umfassen, mit Frischwasser aus dem hausseitigen Versorgungsnetz befüllt wird, und wobei der vorgewärmte Inhalt des Vorratsbehälters (6) mittels Ausgangsleitungsmitteln in den Behandlungsraum eingeleitet wird.

Dabei ist erfindungsgemäß vorgesehen, dass Spülflotte aus dem Behandlungsraum in den Vorratsbehälter mittels Rückführmittel gefördert und dort zwischengespeichert wird, d.h. dass z.B. nur leicht verschmutzte Spülflotte, z.B. am Ende eines Klarspülschritts in den Vorratsbehälter für einen weiteren Reinigungsdurchlauf bevorratet wird und dort mind. die Raumtemperatur der Umgebung der Geschirrspülmaschine annimmt, so dass sowohl der Wasser- als auch der Energieverbrauch reduziert ist. Dabei ist vorzugsweise vorgesehen, dass die Erwärmung passiv erfolgt, d.h. es werden keine Energie verbrauchenden Heinzeinrichtungen benötigt.

In einer bevorzugten Ausführungsform ist vorgesehen, dass die Erwärmung durch Übertragen von Umgebungswärmeenergie erfolgt. So erwärmt sich Frischwasser aus einem hausseitigen Versorgungssystem mit einer Temperatur von ca. 10 bis 15°C auf die Raumtemperatur, die in dem Raum herrscht, in dem die Geschirrspülmaschine aufgestellt ist.

In einer weiteren Ausführungsform ist vorgesehen, dass die Erwärmung durch Abwärme von erwärmter Spülflotte erfolgt. So ist eine Erwärmung über die Raumtemperatur hinaus möglich.

Vorzugsweise ist dabei vorgesehen, dass die Erwärmung des als Wärmetauscher dienenden Vorratsbehälters vor Beaufschlagung mit Spülflotte erfolgt, d.h., durch die Umgebungswärme, die in dem Bereich vorherrscht, der die Geschirrspülmaschine umgibt.

Ferner ist vorzugsweise vorgesehen, dass die Erwärmung des Inhalts des Vorratsbehälters während der Beaufschlagung von Spülgut mit Spülflotte erfolgt, d.h., in dem als Wärmetauscher dienenden Vorratsbehälter ist Wasser bzw. Spülflotte zwischengespeichert und wird durch die Abwärme erwärmt, die durch Beaufschlagung von Spülgut mit aufgeheizter Spülflotte entsteht.

In einer bevorzugten Ausführungsform ist vorgesehen, dass Spülflotte, die zum Klarspülen von Spülgut verwendet wird, in den Vorratsbehälter gefördert wird, sodass lediglich geringfügig verschmutztes Wasser und/oder mit Benetzungsmitteln versetztes Wasser in dem Vorratsbehälter bevorratet wird.

Im Folgenden wird die Erfindung anhand einer Zeichnung erläutert. Es zeigen:
- Figur 1: Eine schematische Darstellung einer erfindungsgemäßen Geschirrspülmaschine,
- Figur 2: Eine schematische Darstellung der Funktionsweise der erfindungsgemäßen Vorrichtung beim Befüllen mit Frischwasser,
- Figur 3: Eine schematische Darstellung der Funktionsweise einer erfindungsgemäßen Geschirrspülmaschine während des Entleerens des Vorratsbehälters,
- Figur 4: Eine schematische Darstellung der Funktionsweise der Erfindung während des Befüllens des Vorratsbehälters mit Spülflotte.

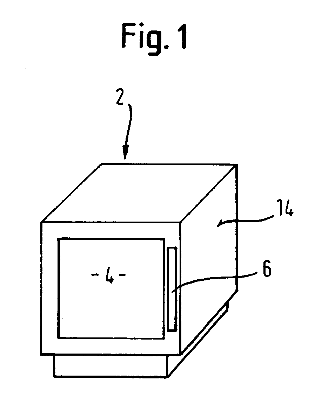

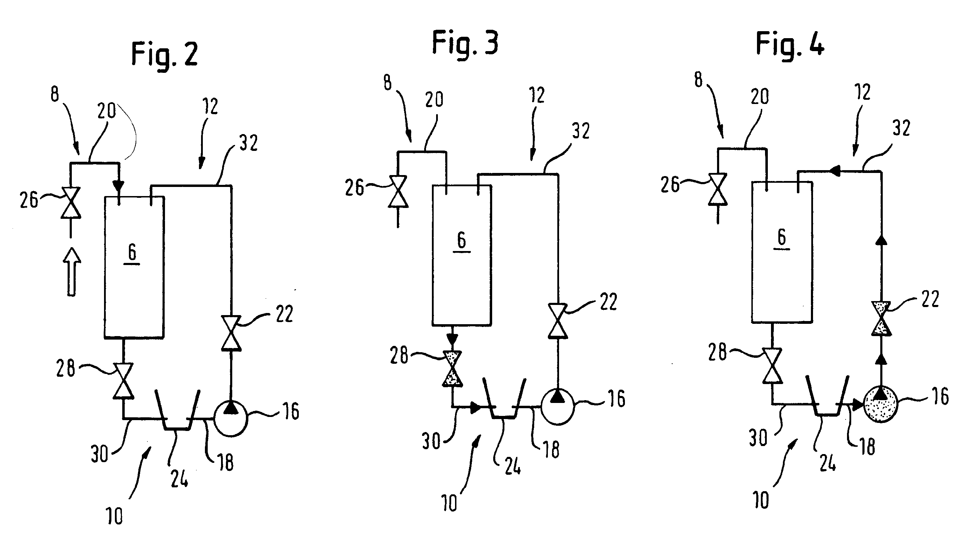

Es wird auf die Figuren 1 bis 4 Bezug genommen.

Eine Haushaltsgeschirrspülmaschine 2 weist in ihrem Inneren einen Behandlungsraum 4 auf, der durch eine Tür (nicht dargestellt) geöffnet bzw. geschlossen werden kann, um im Inneren des Behandlungsraums 4 zu reinigendes Spülgut (nicht dargestellt) auf üblicherweise ausziehbar angeordneten Geschirrkörben (nicht dargestellt) zu platzieren. Zur Beaufschlagung des in dem Behandlungsraum 4 angeordneten Spülgutes weist die Spülmaschine ein Hydrauliksystem (nicht dargestellt) auf, dass eine Umwälzpumpe 16 aufweist, mit der Spülflüssigkeit durch Leitungen des Hydrauliksystems zu rotierbar gelagerten Sprüharmen (nicht dargestellt) gefördert kann, mit denen dann das in den Geschirrkörben gelagerte Spülgut mit Spülflotte beaufschlagt werden kann. Die Spülflotte sammelt sich in einem im Bodenbereich des Behandlungsraumes 4 angeordneten Sumpf 24, der mittels einer Verbindungsleitung 18 mit der Pumpe 16 flüssigkeitsleitend verbunden ist.

Die Geschirrspülmaschine 2 weist einen als Wärmetauscher dienenden Vorratsbehälter 6 auf, der sowohl benachbart zu dem Behandlungsraum 4 als auch zur einer Außenwand 16 der Haushaltsgeschirrspülmaschine 2 angeordnet ist, sodass der als Wärmetauscher dienende Vorratsbehälter 6 sowohl einen thermischen Kontakt mit der Außenwand 14 des Geschirrspülers 2 als auch mit dem Behandlungsraum 4 aufweist. Dies erlaubt es, Flüssigkeiten, wie beispielsweise Spülflotte bzw. Frischwasser in dem als Wärmetauscher dienenden Vorratsbehälter 6 zwischenzuspeichern bzw. zu bevorraten, wobei die in dem als Wärmetauscher dienenden Vorratsbehälter 6 befindliche Flüssigkeit auf die Umgebungstemperatur des Geschirrspülers 2 erwärmt wird, oder wenn beispielsweise im Behandlungsraum 4 erwärmte Spülflotte umgewälzt wird durch deren Abwärme. Es erfolgt also eine passive Erwärmung ohne Einsatz von Heizeinrichtungen.

Der Vorratsbehälter 6 steht mit Zuführmitteln 8 in Verbindung, die eine Zuführleitung 20 umfassen, die mit einem hausseitigen Versorgungsnetz verbunden ist und es erlaubt, den Vorratsbehälter 6 mit Frischwasser aus dem Versorgungsnetz zu füllen. Zum Öffnen bzw. Sperren umfassen die Zuführmittel 8 ein Wassereinlassventil 26, das elektromagnetisch betätigbar ist und bei Bedarf, bspw. bei Beginn oder am Ende eine Spülvorgangs mittels einer Steuerung (nicht dargestellt) der Geschirrspülmaschine 2 geöffnet und geschlossen werden kann.

Zur Entleerung des Vorratsbehälters 6 sind Ausgangsleitungsmittel 10 vorgesehen, die eine Entleerungsleitung 30 umfassen, die eine flüssigkeitsleitende Verbindung zu dem Behandlungsraum 4, bspw. einem im Bodenbereich des Behandlungsraumes 4 des angeordneten Sumpf 24 herstellt. Dabei ist bevorzugt die Entleerungsleitung 30 an einem unteren Bereich des Vorratsbehälters 6 angeordnet, derart, dass ein schwerkraftbedingtes, selbsttätiges Entleeren des Vorratbehälters 6 möglich ist. Das Ausgangsleitungsmittel 10 weist ferner ein Ablassventil 28 auf, das bspw. elektromagnetisch betätigbar ist und mittels der Steuerung der Geschirrspülmaschine bei Bedarf, bspw. um einen Spülflottenwechsel nach Abschluss eines ersten Reinigungsschritts, wie bspw. Vorspülen, geöffnet oder geschlossen werden kann, sodass bei geöffnetem Ablassventil 28 der Inhalt des Vorratsbehälters 6 in den Sumpf 24 der Haushalts-Geschirrspülmaschine 2 strömt.

Ferner sind Rückführmittel 12 vorgesehen, die eine Rückführleitung 32 umfassen, die eine flüssigkeitsleitende Verbindung von dem Sumpf 24 zu dem Vorratsbehälter 6 herstellt. Dabei kann die Rückführleitung 32 mittels eines Flottenspeicherventils 22 geöffnet und geschlossen werden, das bspw. elektromagnetisch betätigbar ist und bei Bedarf, bspw. um am Ende eine Spülschritts Spülflotte zu speichern, von der Steuerung der Geschirrspülmaschine 2 geöffnet und geschlossen werden kann.

Im Folgenden wird die Funktionsweise der erfindungsgemäßen Haushalts-Geschirrspülmaschine 2 erläutert.

Wenn der Vorratsbehälter 6 leer ist, z.B. wenn die Haushalts-Geschirrspülmaschine 2 zum ersten Mal nach dem Aufstellen in Betrieb genommen wird, wird bei Starten der Haushalts-Geschirrspülmaschine 2 der Vorratsbehälter 6 durch Öffnen des Wassereinlassventils 26 gefüllt. In der folgenden Zeit wird sich das im Vorratsbehälter 6 befindliche Frischwasser während des Ablaufs eines Reinigungsprogramms der Haushalts-Geschirrspülmaschine auf Raumtemperatur erwärmen, bzw. wird durch Abwärme von im Behandlungsraum 4 umgewälzter Spülflotte erwärmt.

Nach einem Spülflottenwechsel, beispielsweise nach einem Vorspülschritt, wird durch Öffnen des Ablassventils 28 der Vorratsbehälter 6 entleert, wobei das erwärmte Wasser aus dem Vorratsbehälter 6 in den Sumpf 24 der Haushalts-Geschirrspülmaschine 2 strömt. Im Folgenden wird das vorerwärmte Wasser durch Betrieb der Umwälzpumpe 16 im Behandlungsraum 4 umgewälzt, d.h. es wird durch ein Hydrauliksystem den Sprüharmen zugeführt. Nach Beendigung dieses Reinigungsschritts wird die verschmutzte Spülflotte mittels einer Laugenpumpe (nicht dargestellt) aus der Haushalts-Geschirrspülmaschine 2 in ein hausseitiges Abwassernetz (nicht dargestellt) gefördert.

In einem letzten Schritt erfolgt das Klarspülen von in dem Behandlungsraum 4 angeordnetem Spülgut durch Aufbringen von mit Entspannungsmitteln versetzter Spülflotte. Die mit Entspannungsmitteln versetzte Spülflotte wird ebenfalls mithilfe der Umwälzpumpe 16 umgewälzt. Nach Abschluss dieses Schritts wird das Flottenspeicherventil 22 geöffnet und die Umwälzpumpe von dem die Sprüharme versorgenden Hydrauliksystem getrennt, bspw. mittels eines Ventils (nicht dargestellt) oder einer Wasserweiche (nicht dargestellt). Alternativ kann auch eine Bypassleitung (nicht dargestellt) vorgesehen sein. Es wird dann bei weiter angetriebener Pumpe 16 die mit Entspannungsmitteln versetzte Spülflotte durch die Rückführleitung 32 in den Vorratsbehälter 6 gefördert. Nach Abschluss dieses Vorganges wird die Pumpe 16 deaktiviert und das Flottenspeicherventil 22 wieder geschlossen, sodass für einen späteren, nachfolgenden Reinigungsvorgang nur leicht verschmutzte und lediglich mit Entspannungsmittel versehene Spülflotte bereit steht, die bereits auf die Umgebungstemperatur der Haushalts-Geschirrspülmaschine 2 erwärmt ist, sodass auf diese Weise zum einen der Energieverbrauch durch Verwendung vorerwärmter Spülflotte und zum anderen der Wasserverbrauch durch Wiederverwendung von Spülflotte reduziert ist.

### Bezugszeichenliste

- 2: Haushalts-Geschirrspülmaschine
- 4: Behandlungsraum
- 6: Vorratsbehälter
- 8: Zuführmittel
- 10: Ausgangsleitungsmittel
- 12: Rückführmittel
- 14: Außenwand
- 16: Umwälzpumpe
- 18: Verbindungsleitung
- 20: Zuführleitung
- 22: Flottenspeicherventil
- 24: Sumpf
- 26: Wassereinlassventil
- 28: Ablassventil
- 30: Entleerungsleitung
- 32: Rückführleitung

## Patentansprüche

1. Geschirrspülmaschine, insbesondere Haushalts-Geschirrspülmaschine (2), wenigstens umfassend einen Behandlungsraum (4), in dem Spülgut mit Spülflotte beaufschlagbar ist und mit einem als Wärmetauscher dienenden Vorratsbehälter (6),
der
- in wärmeleitfähigem Kontakt mit dem Behandlungsraum (4) angeordnet ist
- und mit Zuführmitteln (8) in Verbindung steht,
die
- eine Zuführleitung (20), die mit einem hausseitigen Versorgungsnetz verbunden ist und den Vorratsbehälter (6) mit Frischwasser aus dem hausseitigen Versorgungsnetz befüllt
- und ein Wassereinlassventil (26)
umfassen,
wobei der vorgewärmte Inhalt des Vorratsbehälters (6) mittels Ausgangsleitungsmitteln (10) in den Behandlungsraum (4) einleitbar ist, wobei Rückführmittel (12) vorgesehen sind, die Spülflotte aus dem Behandlungsraum (4) in den Vorratsbehälter (6) zum Zwischenspeichern fördern, und wobei die Rückführmittel (12) wenigstens eine Rückführleitung (32) umfassen, die den Behandlungsraum (4) und den Vorratsbehälter (6) miteinander verbindet.

2. Geschirrspülmaschine nach Anspruch 1, **dadurch gekennzeichnet, dass** der Vorratsbehälter (6) in wärmeleitfähigem Kontakt mit einer Außenwand (14) der Haushalts-Geschirrspülmaschine (2) angeordnet ist.

3. Geschirrspülmaschine nach einem der vorherigen Ansprüche, **dadurch gekennzeichnet, dass** die Rückführmittel (12) mindestens eine Pumpe (16) umfassen, mit der Spülflotte aus dem Behandlungsraum (4) in den Vorratsbehälter (6) gefördert werden kann.

4. Geschirrspülmaschine nach Anspruch 3, **dadurch gekennzeichnet, dass** die Pumpe (16) mit Leitungen eines Hydrauliksystems zum Umwälzen von Spülflotte im Behandlungsraum (4) verbunden ist.

5. Geschirrspülmaschine nach einem der vorhergehenden Ansprüche , **dadurch gekennzeichnet, dass** die Rückführleitung (32) wenigstens einen Flottenspeicherventil (22) aufweist, mit der die Rückführleitung (32) geöffnet und geschlossen werden kann.

6. Geschirrspülmaschine nach einem der vorherigen Ansprüche, **dadurch gekennzeichnet, dass** die Ausgangsleitungsmittel (10) eine Entleerungsleitung (30), die eine flüssigkeitsleitende Verbindung zu dem Behandlungsraum (4) herstellt, und ein Ablassventil (28) umfassen.

7. Geschirrspülmaschine nach einem der vorherigen Ansprüche, **dadurch gekennzeichnet, dass** die Geschirrspülmaschine eine Trocknungseinrichtung zum Trocknen von Spülgut in dem Behandlungsraum (4) aufweist.

8. Geschirrspülmaschine nach Anspruch 7, **dadurch gekennzeichnet, dass** die Trocknungseinrichtung wenigstens eine Heizeinrichtung mit einem Behälter mit reversibel dehydrierbarem Material, insbesondere Zeolith, aufweist, durch die Luft aus dem Behandlungsraum (4) durchleitbar ist.

9. Verfahren zum Betreiben einer Geschirrspülmaschine, insbesondere einer Haushalts-Geschirrspülmaschine (2), bei dem in einem Behandlungsraum (4) aufgenommenes Spülgut mit Spülflotte beaufschlagt wird und bei dem der Inhalt eines als Wärmetauscher dienenden Vorratsbehälters (6),
der
- in wärmeleitfähigem Kontakt mit dem Behandlungsraum (4) angeordnet ist
- und mit Zuführmitteln (8) in Verbindung steht,
die
- eine Zuführleitung (20), die mit einem hausseitigen Versorgungsnetz verbunden ist und den Vorratsbehälter (6) mit Frischwasser aus dem hausseitigen Versorgungsnetz befüllt,
- und ein Wassereinlassventil (26)
umfassen,
vor seiner Verwendung im Behandlungsraum (4) vorerwärmt wird,
wobei der vorerwärmte Inhalt des Vorratsbehälters (6) mittels Ausgangsleitungsmitteln (10) in den Behandlungsraum (4) eingeleitet wird, und wobei Spülflotte aus dem Behandlungsraum (4) in den Vorratsbehälter (6) mittels Rückführmittel (12), die wenigstens eine Rückführleitung (32) umfassen, die den Behandlungsraum (4) und den Vorratsbehälter (6) miteinander verbindet, gefördert und im Vorratsbehälter (6) zwischengespeichert wird.

10. Verfahren nach Anspruch 9, **dadurch gekennzeichnet, dass** die Vorerwärmung passiv erfolgt.

11. Verfahren nach Anspruch 10, **dadurch gekennzeichnet, dass** durch Übertragen von Umgebungswärmeenergie passiv vorerwärmt wird.

12. Verfahren nach einem der Ansprüche 9 bis 11, **dadurch gekennzeichnet, dass** die passive Vorerwärmung des Inhalts des Vorratsbehälters (6) vor Beaufschlagung von Spülgut mit Spülflotte erfolgt.

13. Verfahren nach einem der Ansprüche 9 bis 12, **dadurch gekennzeichnet, dass** die passive Vorerwärmung des Inhalts des Vorratsbehälters (6) während der Beaufschlagung von Spülgut mit aufgeheizter Spülflotte durch die dabei entstehende Abwärme erfolgt.

14. Verfahren nach einem der Ansprüche 9 bis 13, **dadurch gekennzeichnet, dass** mittels der Rückführmittel (12) mit Entspannungsmitteln versetzte Spülflotte aus dem Behandlungsraum (4) in den Vorratsbehälter (16) gefördert wird.

## Claims

1. Dishwasher, in particular domestic dishwasher (2), at least comprising a treatment chamber (4), in which items to be washed can have washing liquor applied to them and with a reservoir (6) functioning as a heat exchanger,
- which is arranged in heat-conducting contact with the treatment chamber (4)
- and is connected to feed means (8).
which comprise
- a feed line (20) which is connected to a domestic supply network and fills the reservoir (6) with fresh water from the domestic supply network,
- and a water inlet valve (26).
wherein the pre-heated contents of the reservoir (6) can be directed by means of outlet line means (10) into the treatment chamber (4), **characterised in that** recycling means (12) are provided for conveying the washing liquor from the treatment chamber (4) into the reservoir (6) for storage, and wherein the recycling means (12) has at least one return line (32) which connects the treatment chamber (4) and the reservoir (6) to one another.

2. Dishwasher according to claim 1, **characterised in that** the reservoir (6) is arranged in heat-conducting contact with an exterior wall (14) of the domestic dishwasher (2).

3. Dishwasher according to one of the preceding claims, **characterised in that** the recycling means (12) comprises at least a pump (16), with which washing liquor can be conveyed from the treatment chamber (4) into the reservoir (6).

4. Dishwasher according to claim 3, **characterised in that** the pump (16) is connected with lines of a hydraulic system for the circulation of washing liquor in the treatment chamber (4).

5. Dishwasher according to one of the preceding claims, **characterised in that** the return line (32) has at least one washing liquor reservoir valve (22), with which the return line (32) can be opened and closed.

6. Dishwasher according to one of the preceding claims, **characterised in that** the outlet line means (10) has an emptying line (30) which establishes a fluid-conducting connection to the treatment chamber (4), and an outlet valve (28).

7. Dishwasher according to one of the preceding claims, **characterised in that** the dishwasher has a drying device for the drying of items to be washed in the treatment chamber (4).

8. Dishwasher according to claim 7, **characterised in that** the drying device has at least one heating device with a container with reversibly dehydratable material, in particular zeolite, through which the air from the treatment chamber (4) can be directed.

9. Method for operation of a dishwasher, in particular a domestic dishwasher (2), in which items to be washed accommodated in a treatment chamber (4) have washing liquor applied to them and in which the contents of a reservoir (6) functioning as a heat exchanger,
- which is arranged in heat-conducting contact with the treatment chamber (4)
- and is connected to feed means (8).
which comprise
- a feed line (20) which is connected to a domestic supply network and fills the reservoir (6) with fresh water from the domestic supply network,
- and a water inlet valve (26)
are preheated before being used in the treatment chamber (4),
wherein the pre-heated contents of the reservoir (6) is directed by means of output line means (10) into the treatment chamber (4) and wherein washing liquor is conveyed from the treatment chamber (4) into the reservoir (6) by means of recycling means (12) which comprise at least one return line (32) which connects the treatment chamber (4) and the reservoir (6) to one another, and is stored in the reservoir (6).

10. Method according to claim 9, **characterised in that** the preheating takes place passively.

11. Method according to claim 10, **characterised in that** the preheating is performed passively by transmission of ambient thermal energy.

12. Method according to one of the claims 9 to 11, **characterised in that** the passive preheating of the contents of the reservoir (6) takes place before the items to be washed have washing liquor applied to them.

13. Method according to one of claims 9 to 12, **characterised in that** the passive preheating of the contents of the reservoir (6) takes place during the treatment of items to be washed with washing liquor by the waste heat arising in this process.

14. Method according to one of claims 9 to 13, **characterised in that** washing liquor mixed with wetting agent is conveyed from the treatment chamber (4) into the reservoir (16) by means of the recycling means (12).

## Revendications

1. Lave-vaisselle, en particulier lave-vaisselle domestique (2), comprenant au moins un espace de traitement (4), dans lequel des articles à laver peuvent être traités avec de l'eau de lavage, et avec un réservoir (6) servant d'échangeur thermique,
qui
- est agencé en contact thermoconducteur avec l'espace de traitement (4)
- et est relié à des moyens d'amenée (8),
qui comprennent
- une conduite d'amenée (20), qui est reliée à un réseau d'alimentation côté maison, et remplit le réservoir (6) avec de l'eau d'appoint provenant du réseau d'alimentation côté maison
- et une soupape d'admission d'eau (26)
dans lequel le contenu préchauffé du réservoir (6) peut être introduit dans l'espace de traitement (4) via des moyens d'évacuation (10), dans lequel des moyens de recyclage (12) sont prévus, qui acheminent de l'eau de lavage de l'espace de traitement (4) au réservoir (6) en vue d'un stockage temporaire, et dans lequel les moyens de recyclage (12) comprennent au moins une conduite de recyclage (32), qui relie l'espace de traitement (4) et le réservoir (6) ensemble.

2. Lave-vaisselle selon la revendication 1, **caractérisé en ce que** le réservoir (6) est agencé en contact thermoconducteur avec une paroi externe (14) du lave-vaisselle domestique (2).

3. Lave-vaisselle selon l'une des revendications précédentes, **caractérisé en ce que** les moyens de recyclage (12) comprennent au moins une pompe (16), avec laquelle de l'eau de lavage peut être acheminée de l'espace de traitement (4) au réservoir (6).

4. Lave-vaisselle selon la revendication 3, **caractérisé en ce que** la pompe (16) est reliée à des conduites d'un système hydraulique pour faire circuler l'eau de lavage dans l'espace de traitement (4).

5. Lave-vaisselle selon l'une des revendications précédentes, **caractérisé en ce que** la conduite de recyclage (32) présente au moins une soupape de stockage d'eau (22), avec laquelle la conduite de recyclage (32) peut être ouverte et fermée.

6. Lave-vaisselle selon l'une des revendications précédentes, **caractérisé en ce que** les moyens d'évacuation (10) comprennent une conduite de vidange (30), qui génère une liaison par conduction de liquide avec l'espace de traitement (4), et une soupape de décharge (28).

7. Lave-vaisselle selon l'une des revendications précédentes, **caractérisé en ce que** le lave-vaisselle présente un dispositif de séchage pour le séchage d'articles à laver dans l'espace de traitement (4).

8. Lave-vaisselle selon la revendication 7, **caractérisé en ce que** le dispositif de séchage présente au moins un dispositif de chauffage avec un récipient en matériau pouvant être déshydraté de manière réversible, en particulier la zéolithe, à travers lequel de l'air provenant de l'espace de traitement (4) peut être guidé.

9. Procédé de fonctionnement d'un lave-vaisselle, en particulier un lave-vaisselle domestique (2), dans lequel des articles à laver installés dans un espace de traitement (4) sont traités avec de l'eau de lavage et dans lequel le contenu d'un réservoir servant d'échangeur thermique (6),
qui
- est agencé en contact thermoconducteur avec l'espace de traitement (4)
- et est relié à des moyens d'amenée (8),
qui comprennent
- une conduite d'amenée (20), qui est reliée à un réseau d'alimentation côté maison et remplit le réservoir (6) avec de l'eau d'appoint provenant du réseau d'alimentation côté maison
- et une soupape d'admission d'eau (26)
est préchauffé avant son utilisation dans l'espace de traitement (4),
dans lequel le contenu préchauffé du réservoir (6) est introduit dans l'espace de traitement (4) via des moyens d'évacuation (10), et dans lequel de l'eau de lavage est acheminée de l'espace de traitement (4) au réservoir (6) via des moyens de recyclage (12), qui comprennent au moins une conduite de recyclage (32), qui relie l'espace de traitement (4) et le réservoir (6) ensemble, est acheminée et stockée de manière temporaire dans le réservoir (6).

10. Procédé selon la revendication 9, **caractérisé en ce que** le préchauffage s'effectue de manière passive.

11. Procédé selon la revendication 10, **caractérisé en ce que** le préchauffage s'effectue de manière passive par le biais du transfert de l'énergie thermique environnante.

12. Procédé selon l'une des revendications 9 à 11, **caractérisé en ce que** le préchauffage passif du contenu du réservoir (6) s'effectue avant le traitement d'articles à laver avec de l'eau de lavage.

13. Procédé selon l'une des revendications 9 à 12, **caractérisé en ce que** le préchauffage passif du contenu du réservoir (6) s'effectue pendant le traitement d'articles à laver avec de l'eau de lavage chauffée par le biais de la chaleur perdue qui en résulte.

14. Procédé selon l'une des revendications 9 à 13, **caractérisé en ce que** via les moyens de recyclage (12) l'eau de lavage déplacée par des moyens de détente est acheminée de l'espace de traitement (4) au réservoir (16).
